Europäisches Patentamt

(19) European Patent Office

Office européen des brevets

(11) Publication number: **0 085 212**
**A1**

# (12) EUROPEAN PATENT APPLICATION

(21) Application number: **82300520.2**

(22) Date of filing: **01.02.82**

(51) Int. Cl.³: **G 09 B 7/06**
**A 63 F 9/18**

(43) Date of publication of application:
**10.08.83** Bulletin **83/32**

(84) Designated Contracting States:
**BE DE FR GB IT LU NL**

(71) Applicant: **NUVATEC INC**
**261 Eisenhower Lane South**
**Lombard Illinois(US)**

(72) Inventor: **Slavik, William Henry**
**9034 Stratford Lane**
**Palos Hills Illinois(US)**

(72) Inventor: **Carlson, William Peter**
**2958 North Kostner Avenue**
**Chicago Illinois(US)**

(72) Inventor: **McGowan, Michael Joseph**
**4624 Fairview**
**Downers Grove Illinois(US)**

(74) Representative: **Horton, Andrew Robert Grant et al,**
**BOULT, WADE & TENNANT 27 Furnival Street**
**London, EC4A 1PQ(GB)**

(54) Teaching device of the multiple-choice answer type.

(57) A teaching device includes a reading station (46) provided with six on-off switches (54) for automatically sensing a text key encoded as a pattern of punched holes (27, 29) in a text book (20). The teaching device automatically generates an answer key from the text key by means of a pseudo-random number generator which is run using the text key as a seed. The text book (20) includes a number of multiple choice questions in which the correct answer corresponds to the answer designated in the answer key.

FIG. 1

EP 0 085 212 A1

./...

FIG. 3

0085212

<u>"TEACHING DEVICE"</u> TITLE MODIFIED
see front page

The present invention relates to improvements in teaching devices of the type which evaluate multiple choice questions to aid self instruction.

The advantages of interactive teaching devices are well recognized. One class of these devices provides a number of multiple choice questions to be answered by the user as he proceeds through a course of study. Generally, the course of study will include textual material as well as a number of multiple choice questions. By answering the questions and then checking his answers, the user can check his level of comprehension.

The present invention is directed to an improved teaching device which automatically determines the accuracy of proposed answers to multiple choice questions.

According to one feature of this invention, a teaching device is provided with means for automatically sensing an encoded text key associated with the text book in use, as well as means for automatically generating an answer key in response to the text key. This answer key provides a sequence of correct answers, which sequence is used in determining whether proposed answers selected by the user are correct. The invention is also directed to a text book having an encoded text key for use with such a teaching device. In the presently preferred embodiment, the text key is encoded as a pattern of perforated and unperforated regions arranged along a strip on one margin of one of the pages of the text. In this way, the teaching device can be easily programmed to recognize the correct answers for each separate text with a minimum of user intervention.

According to a second feature of the invention, the teaching device includes means for registering a text key and means for automatically performing a
calculation based on the text key to generate an answer
key indicative of a sequence of correct answers.  In
the presently preferred embodiment, the text key is
supplied as a seed to a pseudo-random number generator.
In this way, a relatively short text key can be used to
generate a large number of potentially infinite series
of randomly distributed correct answers.  For example,
a simple six bit binary text key can specify 64 different answer keys, each of which is independent from the
others, apparently random, and of whatever length
desired.  Furthermore, this approach minimizes requirements for computer memory, since it requires much less
memory to store a program for a pseudo-random number
generator ("PRNG") than it does to store all the answer
keys that can be generated with that PRNG.

The invention, together with further objects and
attendant advantages, will be best understood by reference to the following detailed description taken in
connection with the accompanying drawings.


FIGURE 1 is a perspective view of a presently
preferred embodiment of the present invention.

FIGURE 2 is a detailed view of a portion of the
text book shown in Figure 1.

FIGURE 3 is a cross sectional view taken along
line 3-3 of Figure 1.

FIGURE 4 is block diagram of the electronic circuitry of the embodiment of Figure 1.

FIGURE 5 is a detailed schematic diagram of a
portion of the circuitry shown in Figure 4.

FIGURE 6 is a partial top view of the embodiment
of Figure 1.

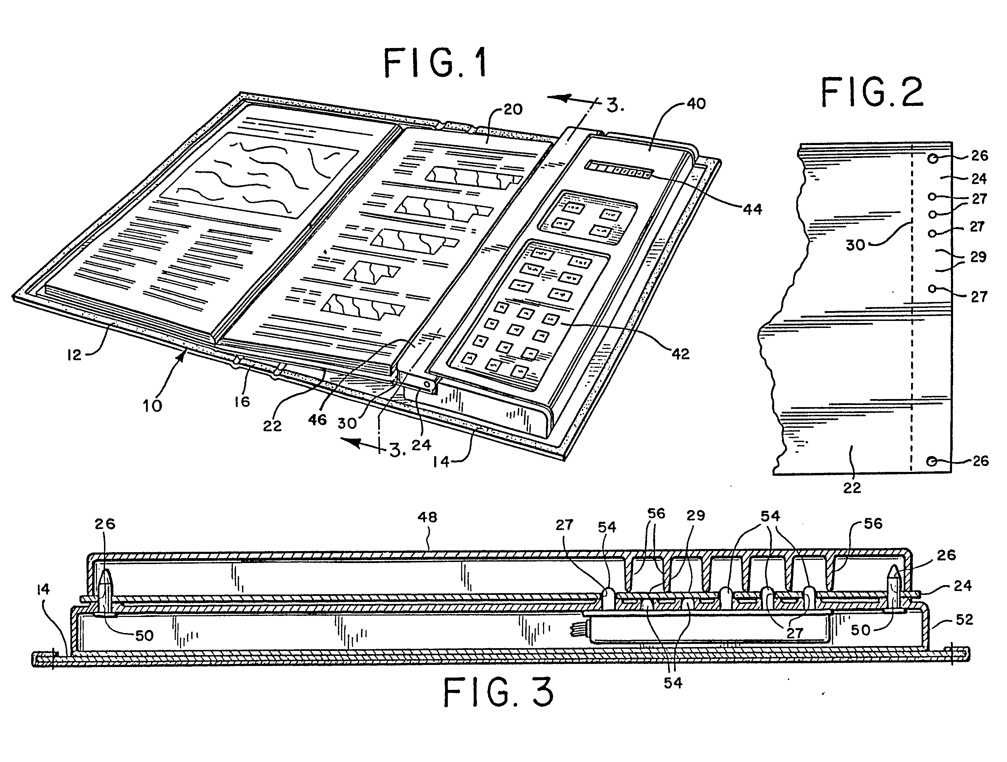

Referring now to the drawings, Figure 1 shows a perspective view of a presently preferred embodiment of the invention. This embodiment includes a binder 10 having a front cover 12, a back cover 14, and a spine section 16. The covers 12, 14 are flexibly mounted to the spine section 16 to allow the binder to fold up from the open position shown in Figure 1 to a closed position (not shown) in which the front cover 12 extends over and generally parallel to the back cover 14.

Attached to the back cover 14 is a self-teaching module 40 which includes a keyboard 42, a digital display 44, and a text key reading station 46. The reading station 46 is adapted to receive a portion of a text book 20 and to automatically sense a six-bit digital text key encoded thereon. The structure and operation of the reading station 46 will be described in detail below in connection with Figure 3.

Figure 1 shows a text 20 positioned with a portion 24 of the text 20 in the reading station 46, ready for use. When not in use, the text 20 can be readily disengaged from the reading station 46, closed, and stored in a pocket (not shown) provided on the inside of the front cover 12. Then the binder 10 can be closed and easily carried or stored, like an ordinary binder.

Preferably, the text book 20 contains study materials as well as a number of multiple choice questions intersperced with the text. As used herein the term "multiple choice question" is to be understood as including true-false questions. Each question is followed by a number of possible answers. If a question is a true-false question then of course there are two possible answers. If the question is a multiple choice question, then five possible answers are provided.

Figure 2 shows a plan view of a portion of the back page 22 of the text book 20. As used herein, the term "text book" is used to include books, booklets, leaflets, and single page structures which include a number of multiple choice questions, whether or not in conjunction with study materials; such study materials may include printed matter, audio recordings and visual recordings. The term "page" is meant to include covers as well as pages, whether or not thicker or less flexible than pages.

The back page 22 includes a flap 24 extending along the outer marginal edge. This flap 24 is connected to the page 22 at a fold line 30 and is foldable between a retracted position, in which the flap 24 does not extend substantially beyond the remaining pages of the text book 20, and an extended position, in which the flap 24 extends as shown in Figure 2. In this embodiment, the fold line 30 is positioned to substantially coincide with the outer edges of the remaining pages (not shown in Figure 2).

The flap 24 is provided with two registration holes 26, one at either end of the flap 24. These registration holes 26 are used to precisely align the flap 24 in the reading station 46. The flap 24 is also provided with a set of six digital indicia 27, 29 which encode the text key, a six bit binary number. In this embodiment, these indicia include perforated regions 27 and unperforated regions 29, which in combination encode the six bit binary number. By altering the pattern of perforations, the indicia 27, 29 can be made to encode any binary number between zero and 63 (decimal).

Figure 3 shows a cross-sectional view of the reading station 46, showing the flap 24 in place. The reading station 46 includes a lower housing 52 and a hinged cover 48. The cover 48 is mounted to rotate with respect to the lower housing 52 about an axis parallel to the fold line 30 of the flap 24. The cover 48 moves between an open position (not shown) in which
the flap 24 can be inserted in or removed from the
reading station 46 and a closed position (shown in
Figure 3) in which the flap 24 is firmly held in position. Two registration pins 50 are mounted on the
lower housing 52 to pass through the registration holes
26 in the flap 24, and thereby to align the flap 24
precisely in the reading station.

In addition, six mechanical on/off switches 54 are
mounted on the lower housing 52, positioned to sense
the presence or absence of perforated regions 27 in the
flap 24. The cover 48 includes a number of ribs 56
positioned to press the flap 24 toward the lower housing
52 between the switches 54. As shown in Figure 3, four
of the switches 54 extend through perforated regions 27
while two of the switches 54 are depressed by unperforated regions 29 pressed against the switches 54 by the
ribs 56. These switches 54 physically sense the six-bit
text key encoded in the physical pattern of the digital
indicia 27, 29 and generate in response thereto a
digital pattern of switch closures. As will be explained
below, this pattern of switch closures in turn generates
a text signal which is used by the teaching module.

The presently preferred embodiment utilizes mechanical switches 54 to sense the text key. Those skilled
in the art will recognize that other means can be used
to record and automatically sense the text key. For
example, the text key can be encoded as an optical
pattern of either light and dark regions or translucent
and opaque regions, and the reading station can employ
light sources and photo-diodes or photo-transistors to
sense the optical pattern. Alternately, the text key
can be encoded and sensed magnetically. Of course, the
length of the text key can be readily chosen to provide
the desired number of distinct text keys. In addition,
the text key can be placed at other positions on the
text book 20.

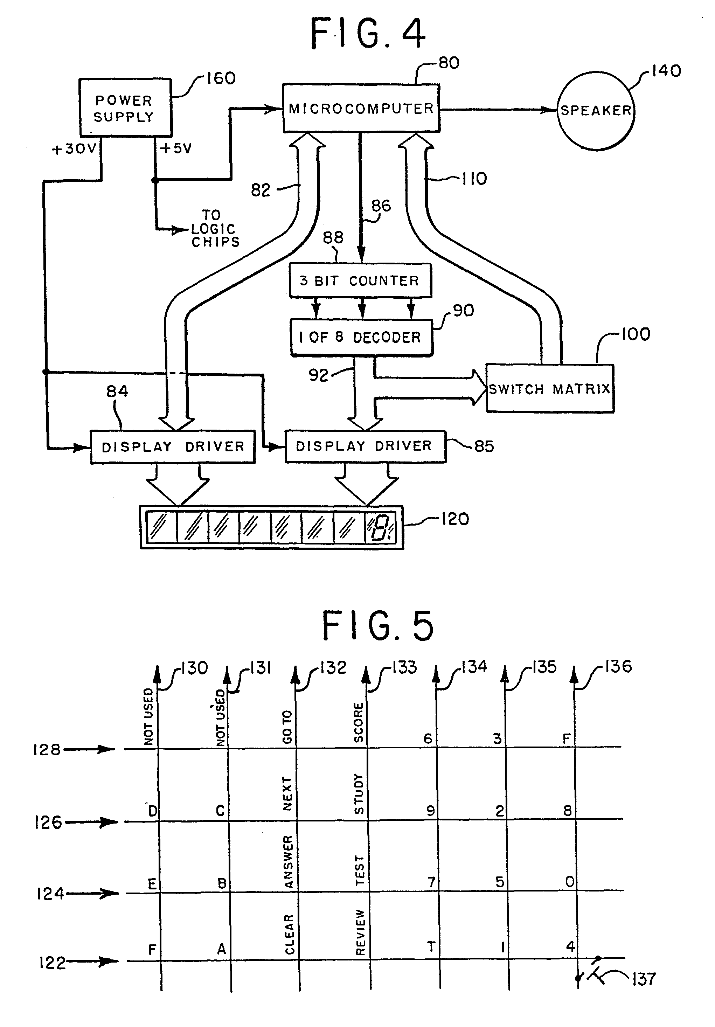

Turning now to Figure 4, the major electronic components of this embodiment include a microcomputer 80 which receives input signals from a switch matrix 100 and supplies output signals to drive a digital display 120, the switch matrix 100, and a speaker 140. A power supply 160 supplies a DC voltage at +5 volts to power the microcomputer 80 and other logic chips as well as a DC voltage at +30 volts to power the display 120.

In this embodiment, the microcomputer 80 is an AIM-65 including 4 kilobytes of Ramdom Access Memory, ("RAM"), marketed by Rockwell International. The program for the microcomputer 80 is shown in assembly language in Table 1, and its operation is discussed below. The digital display 120 is preferably an eight-digit, vacuum type seven-segment fluorescent display marketed by Futaba as type number 9-ST11. The microcomputer 80 selects which of the seven segments are to be illuminated in an individual digit via an 8 bit segment output bus 82 which is connected via a display driver 84 to the display 120. The individual digit being addressed is selected by the microprocessor 80 via output line 86 which is applied as an input to a three-bit counter 88 in order to step the counter 88 repetitively from zero to seven. Output signals from the counter 88 are applied to a 1-of-8 decoder 90, which then applies a signal to one of eight lines in control bus 92, depending on the number encoded in the output signals of the counter 88. In this way, the microcomputer 80 can sequentially address each of the eight digits in the display 120 via driver 85. In this preferred embodiment, the microcomputer 80 is programmed to step through the display at a rate of about two milliseconds per digit so that the entire display is updated every 16 milliseconds. In this preferred embodiment the counter 88 and the decoder 90 are part numbers SN7493 and SN74145, respectively, marketed by Texas Instruments and the drivers 84, 85 are part
numbers DI-514, marketed by Dionics.

In addition, lines 1 through 4 of the control bus
92 are used to drive a switch matrix 100. A detailed
view of the switch matrix 100 is shown in Figure 5, in
which lines 1 through 4 of the control bus 92 are
indicated by reference number 122, 124, 126, 128,
respectively. As previously mentioned, the decoder 90
operates to sequentially place an output signal on each
of the lines of the control bus 92. Simultaneously,
the microcomputer 80 is programmed to monitor lines on
the eight-bit switch input bus 110 for signals. Seven
of these lines are indicated by reference number 130-136
in Figure 5. For example, when the decoder 90 places
an output signal on line 122, the microcomputer registers
a signal on line 130 as indicating closure of switch
"F." Switch 137 is a schematic representation of the
switches placed at each matrix mode which is in use.

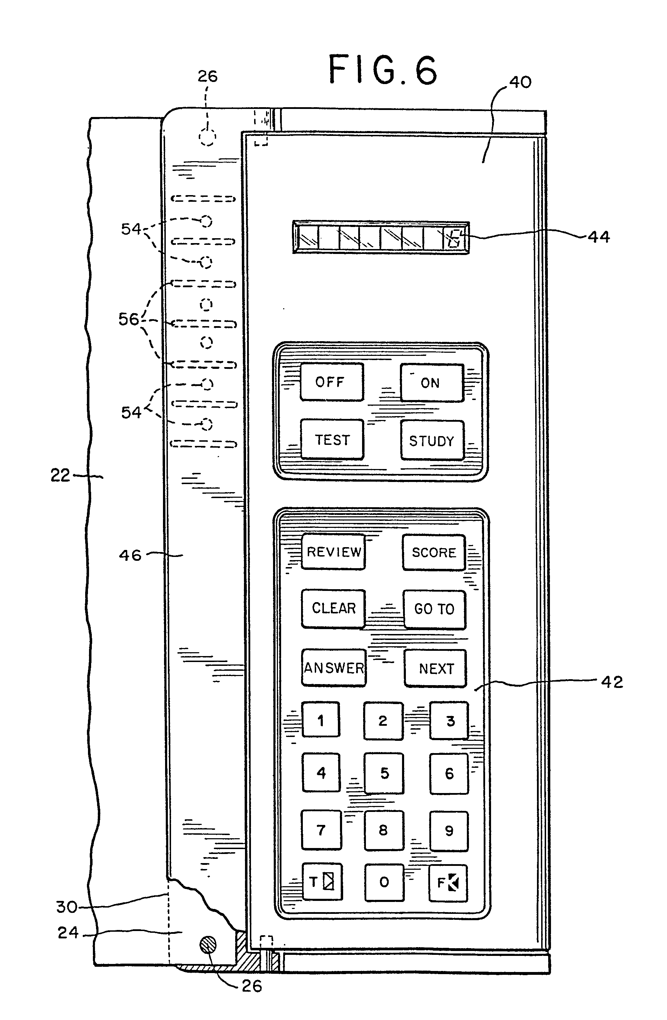

Figure 5 shows the 26 switch inputs. Here the
symbols A, B, C, D, E and F at the extreme left hand
edge of the matrix represent the reading station
switches 54. The remaining nodes of the matrix correspond to the keyboard of the module 40. The arrangement of this keyboard is shown in detail in Figure 6.
As will be explained below, the keyboard switches 0-9,
T and F are used by the user to enter proposed answers,
the remaining keyboard switches are used by the user to
control the operation of the microcomputer 80, and the
display 120 is used by the microcomputer 80 to prompt
the user and to display results.

The program of the microcomputer is listed in
assembly language in Table 1. This listing provides a
detailed description of the program. The following
discussion presents a general description of the organization and operation of the program of Table 1.

When power is first applied or a new text key is
supplied, the microcomputer first executes an initialization routine.  In this initialization routine, the variable QN, which stores the current question number being processed, is set equal to 101.  In addition, the program includes registers for each question, which registers are used to record the correctness of answers proposed by the user.  During initialization, each of these registers is set to indicate incorrect responses.

In addition, certain parameters are calculated from the text key for later use by the program.  The program of Table 1 utilizes a pseudo-ramdom number generator (PRNG) to generate an answer key which designates the correct answer for each question in a series indicated by the text key.  Pseudo-random number generators are well known to those skilled in the art. The Art of Computer Programming Semi-Numerical Algorithms, Vol. 2, by Donald Knuth, contains a discussion and several algorithms for pseudo-random number generators. In general, PRNG's are calculational routines which take an input number, called a seed, perform a calculation on the seed, and return a resulting value.  The program of Table 1 is written to utilize a PRNG which accepts a six-bit seed and produces a six-bit resulting value.  In addition, this PRNG produces a correct answer signal between 1 and 5; this signal is obtained by decoding the six-bit resulting value.  For example, a resulting value between 1 and 13 can correspond to a correct answer signal of 1, a resulting value between 14 and 26 can correspond to a correct answer signal of 2, and so forth.  By calling the PRNG repetitively, supplying the text signal as the seed for the first call and the resulting value from the previous call as the seed for the next call, a sequence of correct answer signals can be generated.  The PRNG is chosen such that this sequence of correct answer signals is apparently substantially random, and a unique series of correct answer signals is generated for each seed used in the first call of the PRNG.  Of course, a given text signal always results in the same sequence of correct
answer signals, which corresponds to the correct answers
for the questions of the textbook bearing that text
signal.

During the initialization routine the PRNG is
called repetitively, starting with the six-bit text key
as a seed. The PRNG resulting values for each series
(question 100, 200, ... 900) are stored in RAM. As
explained below, these values are used in determining
the correct answer for any question between question
number 101 and question number 999.

After the initialization a prompt message is
displayed asking whether the user intends to work in
the test mode or the study mode. The microcomputer
repeatedly monitors the keyboard until either the TEST
or the STUDY key is pressed by the user. Then a flag
for either the test mode or the study mode is set,
depending on which button was pressed. If the test
mode has been selected the current value of QN is saved
as an indication of the start of the test.

At this point the microcomputer 80 displays the
question number currently being processed as well as a
prompt message. The program then samples the keyboard
and branches, depending on which key is registered by
the microcomputer. Seven different branches are provided, as follows.

NEXT - If the NEXT key is registered, QN is incremented and QN is checked to see if the high order digit
has changed, indicating a transition, such as from 199
to 200. If so, and the program is in the test mode,
the score is automatically calculated and displayed as
explained below, and the test or study prompt is again
displayed. If in the study mode, the program merely
returns to the test or study prompt. If the high order
digit of QN is unchanged the program merely displays
the incremented question number and waits for a new
key.

SCORE - If the SCORE key is registered, the program calculates and displays the score, if in the test mode, or simply displays the last test score, if in the study mode. Then the program waits for another key. As explained below, the program records the accuracy of the proposed answer for each question while in the test mode. In order to display the score, the program simply indicates the number of correct answers and the number of total possible correct answers between the start of the test and the current question number. For example, one possible score is the message "7 of 9".

STUDY - If the STUDY key is registered while the program is in the study mode, the program continues to wait for another key. If the STUDY key is registered in the test mode, the program sets the study mode flag and then displays the question number and prompt message.

TEST - If the TEST key is registered while the program is in the test mode, the program continues to wait for another key. If the TEST key is registered in the study mode the program saves the current value of QN as the test start, sets the test mode flag, and then waits for another key.

GOTO - If the GOTO key is registered the program displays a prompt message and waits for additional keys. Keys 0-9 cause the program to save and display the key and to wait for additional keys. When three keys are registered, the program saves the three digit number as the new value of QN, and displays the new QN and a prompt message. The CLEAR key can be used to erase any partial entry of the new QN.

0-9, T, F - If one of these keys is registered, the program displays the entry and then waits for another key. The CLEAR key will cause the displayed entry to be blanked while the ANSWER key will cause the displayed entry to be registered as an answer signal indicative of a proposed answer.

The correct answer is then obtained by first getting the previously stored seed for the series of the current question. For example, if the current question number is 239, the appropriate previously stored seed is that for question 200. As previously explained, these previously stored seeds were generated by repeatedly executing the PRNG using the text key as the initial seed. Thus, the seed for question 200 (the 200 series) is obtained by executing the PRNG 200 times, starting with the text key as the initial seed. The previously stored seed for the current series is then supplied to the PRNG as a seed, and the PRNG is repetitively called the appropriate number of times to generate the answer key for the current question. In the above example involving question 239, the PRNG would be called 39 times, starting with the seed generated by the PRNG at the 200th execution of the PRNG. As previously explained, the PRNG generates a number between 1 and 5. If the current question is a 5 choice multiple choice question, the number generated by the PRNG indicates the correct answer. If the question is a true-false multiple choice question, two of the possible outputs of the PRNG (such as 1 and 2 for example) indicate that the correct answer is "True" and the remaining possible outputs (such as 3-5) indicate that the correct answer is "False".

The proposed answer is then compared with the correct answer as defined by the answer key to determine whether or not it is correct. If in the test mode, the appropriate register for the current question is then set to indicate whether the proposed answer was correct or not, and the program then waits for another key to be registered. If in the study mode, the program displays an appropriate feedback signal to indicate to the user whether the proposed answer is correct or not. If the proposed answer is correct, the program waits for another key to be registered. If the proposed answer is incorrect, the program waits for a CLEAR key or a NEXT key. If the CLEAR key is registered, the program clears the display, and then waits for another key to be registered. If the NEXT key is registered, the program increments QN as described above.

REVIEW - If the REVIEW key is registered while in the test mode, the program automatically calculates and displays the score as explained above and sets the study mode flag. If the REVIEW key is registered a second time the program displays the question number of the first missed question in the test along with a prompt message and then waits for a proposed answer. After a proposed answer is entered, the program immediately evaluates the correctness of the proposed answer and supplies the user with an appropriate feedback message. The program will accept multiple proposed answers, giving appropriate feedback in each case. The user can advance to the next missed question by depressing the REVIEW key again.

The program also includes a monitoring routine that reads the text signal from the switches 54 periodically, each time the switch matrix is read. The text signal is automatically compared with the text signal previously in use. If the two are not identical, the program automatically resets and reinitializes in order to prevent an inaccurate answer key from being used. The text·signal corresponding to no perforations is not a legitimate text signal, but is instead taken to indicate the absence of a text book in the reading station.

Having described the structure and programming of this preferred embodiment, its operation can now be discussed. To begin, the cover 48 of the reading station 46 is opened and the flap 24 is positioned with the registration holes 26 over the registration pins 50. Then the cover 48 is closed to cause the flap 24 to impose the text key on the digital switches 54. The ON key is pressed to supply power to the module 40, and the display comes up with the prompt message "S or T?" Depending on whether the TEST or STUDY key is pressed, the module enters either the test or study modes.

If the TEST key is pressed the module responds with the prompt message "101?" The user can now propose an answer to question 101 (printed in the text book) with the keyboard. The proposed answer will be displayed along with the question number. Once the user is satisfied with his proposed answer, he pushes the ANSWER key and the proposed answer is tabulated. By pressing the NEXT key the user can now advance to the next question and enter another proposed answer. This process is repeated until the end of the test is reached. Pressing SCORE will cause the score to be calculated and displayed. After the test, the user can review his mistakes by pressing the REVIEW key. This causes the module to display the question number of the first missed question of the test. At this point the user can select and enter another proposed answer, and the display will indicate whether or not the new proposed answer is correct. The user can enter any number of proposed answers, and then advance to the next missed question by pressing the REVIEW key. Pressing the OFF key turns off the module.

If the study mode has been selected, the prompting and entry of proposed answers is as described above. However, after each answer is entered with the ANSWER key, the display immediately indicates whether the proposed answer is correct or not and the user can try multiple proposed answers on any one question. As before, the NEXT key is used to advance to the next question. In addition, the GOTO key can be used to go to any desired question number, and the CLEAR key can be used to clear the display.

From the foregoing, it should be apparent that this preferred embodiment is capable of automatically

**0085212**

sensing a text key associated with a text book to allow the teaching device to simply and readily generate the appropriate answer key. The device utilizes a novel and advantageous method to generate the answer key from the text key with small memory requirements and yet great flexibility.

Of course, it should be understood that various changes and modifications to the preferred embodiment described herein will be apparent to those skilled in the art. For example, in alternate embodiments the program can be modified to accept a text key which is manually keyed in via the keyboard by the user in response to instructions contained in the text book. Alternately, other sensing means, such as optical or magnetic sensors, can be used in the means for automatically sensing the text key. In addition, the electronics can be miniaturized to a custom single chip which dispenses with most of the discrete logic chips shown in Figure 4 and is battery powered. It is therefore intended that all such changes and modifications be covered by the following claims.

TABLE 1

```
;
; equates
;
?         sect      'DUMMY'
;
; v.i.a. addresses
;
          aorg      0a000h
;
vdrb      ds        1                     ; data register b
vdra      ds        1                     ; data register a
vddrb     ds        1                     ; data direction register b
vddra     ds        1                     ; data direction register a
;
vt1cl     ds        1                     ; timer 1 counter low
vt1ch     ds        1                     ; timer 1 counter high
vt1ll     ds        1                     ; timer 1 latch low
vt1lh     ds        1                     ; timer 1 latch high
;
vt2l      ds        1                     ; timer 2 low
vt2h      ds   .    1                     ; timer 2 hi
;
vsr       ds        1                     ; shift register
;
vacr      ds        1                     ; auxiliary control register (acr)
vpcr      ds        1                     ; peripheral control register (pcr)
vifr      ds        1                     ; interrupt flag register
vier      ds        1                     ; interrupt enable register
;
; monitor locations
;
          aorg      0a400h                ;
;
irqv2     ds        2                     ; interrupt request vector
;
; used in program
;
t1clk     equ       00040h                ; timer 1 free running mode
;
clrint    equ       0007fh                ; clear all interrupts
t1inte    equ       000c0h                ; enable timer 1 interrupts
t1intf    equ       00040h                ; timer 1 interrupt flag mask
;
cb2pls    equ       000a0h                ; pulse cb2 when write port b (vdrb)
```

```
;
dspsiz    equ       8                   ; size of the display
;
numscn    equ       5                   ; number of scans needed for
;                                         valid key entry
valstt    equ       4                   ; number of states with keys
;
delcon    equ       0c850h              ; constant for 1/20 second delay
;
;   *****
;
inttim    equ       2000                ;
;
;   *****
;
; equates for the keys
;
k4        equ       14
k1        equ       11
kt        equ       20
us        equ       22
cl        equ       23
k0        equ       10
k5        equ       15
k7        equ       17
ts        equ       24
an        equ       25
k8        equ       18
k2        equ       12
k9        equ       19
st        equ       26
nx        equ       27
kf        equ       21
k3        equ       13
k6        equ       16
sc        equ       28
gotok     equ       29
;
cs        equ       28
co        equ       26
cr        equ       27
ct        equ       20
cf        equ       31
cques     equ       23
```

```
ce         equ       24
cn         equ       25
cblank     equ       22
cu         equ       31
cd         equ       32
cy         equ       29
cp         equ       30
ca         equ       33 .
;
;cb2low    equ       sound0+0c0h
;cb2hi     equ       sound0+0e0h
;
;sound0    equ       cb2hi+0ch
;sound1    equ       cb2hi+0eh
;
cb2hi      equ       0ch+0e0h
cb2low     equ       0ch+0c0h
;
sound0     equ       0e0h+0ch
sound1     equ       0e0h+0eh
;
hi         equ       2
lo         equ       3
           copy      'charequ.s'
;  equates for the display characters
;
;
C0         equ       0FCH
C1         equ       060H
C2         equ       0DAH
C3         equ       0F2H
C4         equ       066H
C5         equ       0B6H
C6         equ       0BEH
C7         equ       0E0H
C8         equ       0FEH
C9         equ       0F6H
CT         equ       01EH
CF         equ       0CEH
CBLANK     equ       000H
CQUES      equ       0CAH
CE         equ       09EH
CN         equ       02AH
```

```
CO      equ     03AH
CR      equ     00AH
CS      equ     0B6H
CY      equ     076H
CP      equ     0CEH
CU      equ     030H
CD      equ     07AH
CA      equ     0CEH
;
asmRAM: sect    'RAM'
        copy    'asmram.s'
;
; this is the ram allocation necessary for the assembly
;   language routines
;
disply  ds      8                       ; display buffer
disply2 ds      8                       ;
keyinp  ds      1                       ; for passing the input key
percntl ds      1
percnth ds      1
delloop ds      1
swtinp  ds      1                       ; value of the page edge switches
keybrd  ds      8                       ; used to store read-in values from keyboard
state   ds      1                       ; state of the machine
tmpswt  ds      1                       ; temp storage for decoding page
;                                         edge switches
scncnt  ds      1                       ; for counting scans
lstkey  ds      1                       ; last input key
temp    ds      1                       ; just a temp storage location
;
rwres   ds      100                     ; results of test 0=wrong,1=right
;
asmROM: sect    'ROM'
        copy    'asmini.s'
;
; this is the initialization routine
;   (gets the interrupts going, blanks the display and initializes
;    all locations relevant to the assembly language routines)
;
ioinit
        sei                             ; disable interrupts
```

0085212

```
        ;
                lda     #0ffh           ; set up data direction regs
                sta     vddrb           ; vdrb is output
        ;
                lda     #00             ; vdra is input
                sta     vddra           ;
        ;
                lda     #cb2pls         ; cb2 pulses when write vdrb
                sta     vpcr            ;  this increments the state
        ;
                ldx     #dspsiz         ; x = size of the display
                lda     #cblank         ;
        ;
clrdis
                sta     vdrb            ; blank out the display
                sta     disply-1,x      ; also the display buffer
        ;
                dex                     ; decrement count/index
                bne     clrdis          ; continue if not done
        ;
notst8
                lda     #cblank         ;
                sta     vdrb            ;
        ;
                lda     vdra            ; read the keyboard
                lsr                     ; check if lsb = 0 (state 8)
                bcs     notst8          ; no: keep looking
        ;
                lda     #cb2hi          ;
                sta     vpcr            ;
        ;
                lda     #01             ; ok: next is state 1
                sta     state           ;
        ;
                lda     #(lo,scnint)    ; initialize interrupt vector
                sta     irqv2           ;
                lda     #(hi,scnint)    ;
                sta     irqv2+1         ;
        ;
                lda     #clrint         ; want to monitor timer 1 only
                sta     vier            ;  so disable other interrupts
        ;
                lda     #t1inte         ; enable timer 1 interrupts
                sta     vier            ;
```

```
;
        lda     #t1clk          ; set timer 1 up as free running
        sta     vacr            ;  continuous interrupts
;
        lda     #(lo,inttim)    ; initialize timer 1
        sta     vt1cl
        lda     #(hi,inttim)    ;
        sta     vt1ch           ;
;
        cli                     ; enable interrupts
;
        lda     #000h           ; initializes switches to "no book"
        sta     swtinp          ; for basic
;
        rts                     ; return
;
        copy    'asmint.s'
;
; this is the display/keyboard interrupt handler
;
scnint
        pha                     ; save a-reg
        txa                     ; save x-reg
        pha                     ;
        tya                     ; save y-reg
        pha                     ;
;
        lda     vt1cl           ; zero interrupt flag
;
        ldx     state           ; x = state (which disp char)
        lda     disply-1,x      ; get next char
        tay                     ; do decode
        lda     dspcod-10,y     ;
        sta     vdrb            ;
;
        lda     #cb2low         ;
        sta     vpcr            ;
;
        nop                     ;
;
        lda     #cb2hi          ;
        sta     vpcr            ;
;
        lda     dspcod-10,y     ;
```

```
                sta     vdrb            ;
;
                lda     vdra            ; read keyboard
                sta     keybrd-1,x      ; save it
;
                lsr                     ; check if hardware sees state 8
                bcc     hrdchk          ; yes (lsb = 0)
;
                cpx     #08             ; not yet so check if we think
                                        ;   it is state 8 or greater
                bcc     nots8           ; not yet so no problem
;
                                        ;   oops: out of sync
;
hrdchk
                jsr     getswt          ; update page edge switches
;
                ldx     #00             ; so state becomes 1
;
nots8
                inx                     ; increment state
                stx     state           ;
;
                pla                     ; restore y-reg
                tay                     ;
                pla                     ; restore x-reg
                tax                     ;
                pla                     ; restore a-reg
;
                rti                     ; return from interrupt
;
getswt
                lda     #00             ; zero out temporary location
                sta     tmpswt          ;
;
                ldy     #03             ; offset into keyboard array
                                        ;   (also an offset and count)
;
                ldx     #05             ; number of shifts
;
get2bt
                txa                     ; save bit shift count
                pha                     ;
;
```

```
            lda     #006h           ; want page edge switches
            and     keybrd,y        ;  from keyboard reads
;
doasl
            asl                     ; shift over
            dex                     ; decrement shift count
            bne     doasl           ; more shifts
;
            ora     tmpswt          ; combine with previous byte
            sta     tmpswt          ;  and remember
;
            pla                     ; now decrement bit shift count
            tax                     ;
;
            dex                     ;  by 2
            dex                     ;
;
            dey                     ; decrement word count/offset by 1
            bne     get2bt.         ; if more then continue
;
            lda     tmpswt          ; take computed value
            lsr                     ; adjust (because of space saving algorithm)
            lsr                     ;
            eor     #03fh           ; flip bits
            cmp     swtinp          ; see if same (no book change)
            bne     newbook         ; nope -- new book !!
            rts                     ; same book -- all is well
newbook:
            ldx     swtinp          ; check for 00 switches (no book)
            beq     gotabook        ; were looking for a book
            jmp     start           ; wow! fast book change
gotabook:
            sta     swtinp          ; save switches value
            rts                     ; return
;
            copy    'asmscn.s'
;
; this routine checks the result of the keyboard scans
;
getkey
            jsr     gets8           ; find end of s8
;
notclr
```

```
            lda     #numscn         ; number of scans for validity
            sta     scncnt          ; for counting
;
nxtscn
            jsr     gtnos8          ; look for not s 8
            jsr     gets8           ; find s 8
;
            jsr     chkkey          ; check for a key
            bne     notclr          ; got a key still pressed
;
            dec     scncnt          ; no key so dec count
            bne     nxtscn          ; need a 0
;
nokey
            lda     #00             ; want a "no match"
            sta     lstkey          ;  for last key
;
doscan
            jsr     gtnos8          ; want full scan
            jsr     gets8           ;
;
            jsr     chkkey          ; check for key
            beq     nokey           ; no key
;
            cmp     lstkey          ;
            beq     chkval          ; same key so check if valid yet
;
            sta     lstkey          ; new key
;
            lda     #numscn-1       ;
            sta     scncnt          ;
;
            bne     doscan.         ; ***** always true *****
;
chkval
            dec     scncnt          ; decrement count
            bne     doscan          ; not yet valid
;
            sta     keyinp          ; all done
;
            txa                     ;
            pha                     ;
;
```

```
        jsr     savedisp        ;
        ldx     #00             ;
        jsr     disclr          ;
        jsr     gets0           ;
        jsr     gets0           ;
;
        pla                     ;
        tax                     ;
; sounds
;
        lda     percntl_tbl,x   ;
        sta     percntl         ;
        lda     percnth_tbl,x   ;
        sta     percnth         ;
        lda     delloop_tbl,x   ;
        sta     delloop         ;
;
        sei                     ; no interrupts please
;
        lda     #CBLANK         ; blank out last character of display
        sta     vdrb            ;
;
        jsr     sound           ;
;
        cli                     ; let the interrupts proceed
;
        lda     keyinp          ;
;
        rts                     ; return
;
chkkey
        ldx     #valstt         ; number of valid states (with keys)
;
chkstt
        ldy     #08             ; bit count
;
        lda     keybrd-1,x      ; get results of a scan
        ora     nulmsk-1,x      ; show invalid bits as "not pressed"
;
chkbit
        lsr                     ; check a bit
        bcc     gotkey          ; O = pressed
;
```

```
            dey                         ; decrement bit count
            bne         chkbit          ; not done
;
            dex                         ; decrement state count
            bne        , chkstt         ; not done
;
            lda         #00             ; no keys pressed
            rts         .               ; return "eq"
;
gotkey
            dex                         ; decrement state for indexing
            txa                         ;
            asl                         ; mult by 8
            asl                         ;
            asl                         ;
;
            dey                         ; decrement bit count for indexing
            sty         temp            ; need to add to a
;
            clc                         ; carry = 0
            adc         temp            ; got an index
;
            tax                         ; for indexing
            lda         keycod,x        ; get keycode
            rts                         ; and condition code
;
gets8
            lda         vdra            ; look for state 8
            lsr                         ; low bit = 0
            bcs         gets8           ; no
            rts                         ; yes
;
gtnos8
            lda         vdra            ;
            lsr                         ;
            bcc         gtnos8          ;
            rts                         ;
;
            copy        'asmsnd.s'
;
delcon2: equ            0005
;
sound:
sound3:
```

0085212

```
sound2:
        lda     #sound1                 ;
        sta     vpcr                    ;
;
        jsr     snddelay                        ;
;
        lda     #sound0                 ;
        sta     vpcr                    ;
;
        jsr     snddelay                        ;
;
        dec     percntl
        bne     sound2                  ;
;
        dec     percnth                 ;
        bne     sound3                  ;
;
        rts                             ;
;
snddelay
        ldx     delloop         ; loop 20 times
sett2
        lda     #(lo,delcon2)   ; load t2 with delay constant
        sta     vt2l
        lda     #(hi,delcon2)
        sta     vt2h
        lda     #20h            ; for bit test
waitt2
        bit     vifr            ; timer done?
        beq     waitt2          ; no, keep waiting
        dex                     ; decrement counter
        bne     sett2           ; not 0, keep going
        rts                     ; done, return
;
        copy    'asmtbl.s'
;
keycod
        db      kf, k3, k6, sc, gotok
        db      0, 0, 0
        db      k8, k2, k9, st, nx
        db      0, 0, 0
        db      k0, k5, k7, ts, an
```

```
        db      0,0,0
        db      k4,k1,kt,as,c1

        db      0,0,0
;
; table of 7-segment codes for displaying characters
;
dspcod
        db      C0,C1,C2,C3,C4

        db      C5,C6,C7,C8,C9

        db      CT,CF,CBLANK,CQUES,CE

        db      CN,CO,CR,CS,CY

        db      CP,CU,CD,CA
;
nulmsk
        db      07,07,07,07
;
; tables for sounds
;
percntl_tbl
        db      03fh,03fh,03fh,01,01

        db      0,0,0
        db      03fh,03fh,03fh,01,01

        db      0,0,0
        db      03fh,03fh,03fh,01,01

        db      0,0,0
        db      03fh,03fh,03fh,01,01

        db      0,0,0
;
percnth_tbl
        db      2,2,2,2,2

        db      0,0,0
        db      2,2,2,2,2
```

```
        db          0, 0, 0
        db          2, 2, 2, 2, 2

        db          0, 0, 0
        db          2, 2, 2, 2, 2

        db          0, 0, 0
;
delloop_tbl
        db          5, 6, 6, 5, 5

        db          0, 0, 0
        db          6, 6, 6, 5, 5

        db          0, 0, 0
        db          6, 6, 6, 5, 5

        db          0, 0, 0
        db          6, 6, 5, 5, 5

        db          0, 0, 0
;
;
;
;
; disclr clears the display from position x to position 7
;     needs x
;     destroys a, x
;
;
        sect        'ROM'
;
disclr
disclr1
disclr2
        lda         #cblank                 ; display a blank
        sta         disply, x
```

```
        inx
        cpx     #8              ; done?
        bne     disclr2         ;no do some more
;
        rts
;
;
; htod converts a hex number in a into 2 decimal digits.
; msd returned in x, lsd returned in y.
;
htod
        sta     save            ; save it
        and     #0fh            ; and off msd
        cmp     #0ah            ;
        bcc     lowok           ; if lsd is less than a, lsd is ok
        sec
        sbc     #0ah            ; else, subtract a from lsd
        clc
        adc     #10h            ; make it look like decimal
lowok
        pha                     ; save it
        lda     save            ; get original # back
        lsr                     ; get rid of higlow digit
        lsr
        lsr
        lsr
        sta     save            ; save it
        sed                     ; set decimal
        clc
        adc     save            ; a=2*msd
        sta     save            ; save it
        clc
        adc     save
        sta     save            ; double again: save = 4*msd
        clc
        adc     save
        sta     save            ; save = 8*msd
        clc
        adc     save
        sta     save            ; save = 16*msd
        pla                     ; restore lsd
        clc
        adc     save            ; add them together
        sta     save            ;
```

```
        cld                     ; clear decimal
        and     #0fh            ; and off high digit
        tay                     ; save in y
        lda     save            ; restore #
        lsr                     ; get rid of lo digit
        lsr
        lsr
        lsr
        tax                     ; save in x
        rts
;
; dtoh converts decimal to hex
;    needs least sig. digit in y, msd in x
;    returns hex number in a
;
;
dtoh
        tya                     ; lo digit
        inx                     ; adjust for test
        bne     do10s           ; always true
loop:
        clc                     ; carry = 0
        adc     #10             ; mult by 10
do10s:
        dex                     ; check for more 10s
        bne     loop            ; yup
        sta     counter         ;
        lda     counter         ; yes, we're done
        rts
;
; delay
;    delays for 1 second
;    used by score display, test set and study set
;
delay
        ldx     #20             ; loop 20 times
sett2
        lda     #{lo,delcon}    ; load t2 with delay constant
        sta     vt2l
        lda     #{hi,delcon}
        sta     vt2h
        lda     #20h            ; for bit test
waitt2
```

```
        bit     vifr                ; timer done?
        beq     waitt2              ; no, keep waiting
        dex                         ; decrement counter
        bne     sett2               ; not 0, keep going
        rts     ,                   ; done, return
;
savedisp
        ldx     #08                 ; 8 bytes
saveloop
.       lda     disply-1,x          ;
        sta     disply2-1,x         ;
;
        dex                         ;
        bne     saveloop            ;
;
        rts                         ;
;
restdisp
        ldx     #08                 ;
restloop
        lda.    disply2-1,x         ;
        sta     disply-1,x          ;
;
        dex                         ;
        bne     restloop            ;
;
        rts                         ;
;
;
;
; goto key
;
        list    1
;
        sect    'ROM'
;
goto
        lda .   #cques              ; display a "?"
        sta     disply
        ldx     #01
        jsr     disclr              ; clear rest of display
        ldx     #0ffh               ; init save areas
        ldy     #0ffh
```

0085212

```
inp3    jsr     phxy            ;
        jsr     getkey
        jsr     plxy
        cmp     #:1             ; clear key?
        beq     goto            ; yes, start again
        pha                     ;
        jsr     phxy            ;
        jsr     restdisp        ;
        jsr     plxy            ;
        pla                     ;
        cmp     #kt
        bcs     inp3            ; if not a #, start again
        cpx     #0ffh           ; 1st digit?
        bne     dig2            ; no, try 2nd digit
        cmp     #11             ; was the key "1"?
        bcc     inp3            ; no, less, then invalid key
        sta     disply+1        ; yes, display it
        sec
        sbc     #10             ; decode char
        tax                     ; save it
        jmp     inp3            ; get another
dig2    cpy     #0ffh           ; 2nd digit?
        bne     dig3            ; no, try 3rd
        sta     disply+2        ; yes, display it
        sec
        sbc     #10             ; decode
        tay                     ; save
        jmp     inp3            ; get next char
dig3    sta     disply+3        ; display it
        sec
        sbc     #10             ; decode
        sta     qn+2            ; save it
        sty     qn+1            ; store 2nd digit
        txa
        pha                     ; save new series num
        ldx     qn+1            ; load for conversion to hex
        ldy     qn+2
        jsr     dtoh            ; convert to hex
        sta     offset          ; store
        pla
        cmp     qn              ; series change?,
```

```
        beq     gtdone          ; no, goto is done
        sta     qn              ; yes, store it
        lda     modefl          ; what mode
        beq     gtretn          ; study, then goto is done
        jsr     cscore          ; test, then calc & disp score
gtretn
        lda     #00             ; forget last test
        sta     lq
        sta     fq              ; zero test boundaries
        lda     #(lo,dpsort)    ; set return to dpsort
        sta     subrtn
        lda     #(hi,dpsort)
        sta     subrtn+1
        rts
gtdone
        sta     qn              ; store series num
        lda     #(lo,qdisp)     ; set return to qdisp
        sta     subrtn
        lda     #(hi,qdisp)
        sta     subrtn+1
        rts
;
;
;
        list    1

        sect    'ROM'
;
next
        inc     offset          ; increment qust. #
        lda     offset          ; for comparison
        cmp     #64h            ; >= 64h?
        bcs     newsn           ; yes, new series number
        lda     #(lo,qdisp)
        sta     subrtn
        lda     #(hi,qdisp)
        sta     subrtn+1        ; return to qdisp
        rts                     ; return
newsn
        lda     #01             ; make qn = 01
        sta     offset
        inc     qn              ; increment series num.
        lda     qn
        cmp     #0ah            ; still in bounds?
```

```
        bcc     inbnd               ; yes
        lda     #01
        sta     qu                  ; no, set back to 1
inbnd
        lda     modefl              ; check mode
        beq     donenx              ; study--done
        jsr     cscore              ; calculate, display score
        lda     #00,                ; forget last test
        sta     fq
        sta     lq                  ; zero out test boundaries
donenx
        lda     #(lo,dpsort)        ;set return to dpsort
        sta     subrtn
        lda     #(hi,dpsort)        ;
        sta     subrtn+1
        rts
;
;
;
;
;  clear key just returns to qdisp
;
        list    1
;
        sect    'ROM'
;
clear
        lda     #(lo,qdisp)
        sta     subrtn
        lda     #(hi,qdisp)
        sta     subrtn+1
        rts
;
;   answer key is invalid. return to qndisp
;
answer
        lda     #(lo,qndisp)
        sta     subrtn
        lda     #(hi,qndisp)
        sta     subrtn+1
        rts
;
```

```
;
;   *****
;
;   page 0 allocation
;
;   *****
;
page0_global sect 'PAGE0'
;
ansptr   ds       2
;
;   *****
;
;   ram allocation
;
;   *****
;
ram_global sect 'RAM'
;
fq:
         ds  .    1
lq:
         ds       1
modefl:
         ds       1
offset:
         ds       1
qn:
         ds       3
resp:
         ds       1
revfl:
         ds       1
rvptr:
         ds  .    1
save:
counter:
         ds       1
scorsv:
         ds       8
subcall:
         ds       2
subrtn:
```

0085212

```
         ds      2
 .  SEED:
    SEEDS:
    swsave:
         ds      1                           ; seed  for series 000
                                             ; also: SEED for this book
         ds      9                           ; seeds for series 100 - 900
    ;
    ;
    ;       handle review (*) key
    ;
         list    1
         sect    'ROM'
    review
         lda     lq
         beq     ret                         ; no test, so return
         lda     revfl                       ; has a review been started?
         bne     rev                         ; yes
         jsr     cscore2                     ; no, calc & display score while
         jsr     getkey                      ; getting a key
         cmp     #as                         ; 2nd *?
         beq     rev                         ; yes, start review
         pha                                 ; save key
         lda     #(lo,inp2a)
         sta     subrtn                      ; no, return to handle the key
         lda     #(hi,inp2a)
         sta     subrtn+1
         pla                                 ; return key
         rts                                 ; return
    rev
         lda     #01
         sta     revfl                       ; set review-started flag
         lda     #00                         ; force study mode
         sta     modefl
         lda     rvptr
         cmp     fq                          ; check position of rvprt
         bcs     chklq                       ; rvptr >= fq, check lq
         lda     fq                          ; else, its out of bounds..
         sta     rvptr                       ; set to first question
         jmp     set                         ; start checking
    chklq
         cmp     lq
         beq     set                         ; rvptr = lq, its ok
         bcc     set                         ; rvptr < lq, its ok
```

```
            lda     fq              ; else, its out of bounds
            sta     rvptr           ; reset it.
set
            ldx     rvptr           ; use x to index rwres
look
            lda     rwres,x
            beq     foundw          ; byte is 0, quest. was wrong
            inx                     ; else, increment indexes
            inc     rvptr
            lda     lq
            cmp     rvptr           ; rvptr past lq?
            bcc     nomore          ; yes, done reviewing
            jmp     look            ; no, look some more
foundw
            stx     offset          ; offset = rvptr
            cpx     lq              ; check if this is the last ques.
            beq     nomore2         ; yes
            inc     rvptr           ; increment for next time through
            jmp     ret             ; do the question over
nomore
            lda     lq
            sta     offset
            inc     offset          ; current question = lq+1
nomore2:
            lda     #00
            sta     rvptr           ; clear rvptr
            sta     revfl           ; clear review started flag
ret
            lda     #(lo,qdisp)     ; return to qdisp
            sta     subrtn
            lda     #(hi,qdisp)
            sta     subrtn+1
            rts
;
;
;
            list    1
;
            sect    'ROM'
;
score
            lda     lq
            beq     return          ; check last question
            lda     modefl          ; if 0, no test has been taken
```

0085212

```
          beq       mfclr              ; study mode, just display
          jsr       cscore             ; else, calculate score
mfclr
          lda       #01
          jsr       dscore             ; display score
return
          lda       #(lo,qdisp)        ; set return to qdisp
          sta       subrtn
          lda       #(hi,qdisp)
          sta       subrtn+1
          rts
;
;    cscore calculates the score
;
cscore2
          lda       #00
          beq       cscore3            ; always true
;
cscore
          lda       #01
cscore3:
          pha                          ;
          lda       lq                 ; ckeck to see if there is a test
          beq       notest             ; no, return
          lda       #00                ; start at 1st quest. in test
          ldx       fq                 ; keep score in decimal
          sed
addlp
          clc
          adc       rwres,x            ; add up answers in rwres
          inx                          ; point to next response
          cpx       lq                 ; at last question?
          beq       addlp              ; yes, do one more
          bcc       addlp              ; not yet, keep going
          cld                          ; clear decimal
; save <score> of <#attempted> in scorsv for displaying score
          pha                          ; save # right
          lsr                          ; shift msd down to lsd
          lsr
          lsr
          lsr
          clc
          adc       #10                ; get char code for digit
          sta       scorsv             ; save char
```

```
        pla
        and       ·#0fh              ; "and" off msd
        clc
        adc       #10               ; get char code
        sta       scorsv+1          ; save it.
        lda       #cblank           ; get a blank
        sta       scorsv+2
        sta       scorsv+5          ; display " of "
        lda       #co
        sta       scorsv+3          ;
        lda       #cf
        sta       scorsv+4
        lda       lq                ; find # attempted
        sec
        sbc       fq
        clc                         ;
        adc       #01               ;
        jsr       htod              ; convert to decimal
        txa                         ; msd into a
        clc
        adc       #10               ; get char code
        sta       scorsv+6          ; store
        tya                         ; lsd into a
        clc
        adc       #10               ;
        sta       scorsv+7          ; store
        pla
;
;   dscore displays the score held in scorsv
;
dscore
        pha
        lda       lq                ; any attempted?
        beq       notest            ; no, don't display
        jsr       .dispscore        ; do display
        pla                         ;
        beq       nodelay           ;
        jsr       delay             ; delay 1 second
nodelay
        pha.
notest
        pla
        rts
```

```
;
dispscore:
        ldx     #08             ; for x = 0 to 7
translp
        lda     scorsv-1,x      ; transfer scorsv to disply
        sta     disply-1,x
        dex
        bne     translp
        rts
;
;
;
;    start up for sp
;
        list    1
;
        sect    'ROM'
;
start
        ldx     #0ffh
        txs                     ; init stack pointer
        cld
        jsr     ioinit          ; initialize hardware
        ldx     #00             ;
        jsr     disclr          ; clear display
        lda     #cr
        sta     disply+2        ; display 'ready'
        lda     #ce
        sta     disply+3
        lda     #ca
        sta     disply+4
        lda     #cd
        sta     disply+5
        lda     #cy
        sta     disply+6
start2:
ckswit
        lda     swtinp          ; check switches
        sta     swsave          ; save them
        beq     ckswit          ; keep looking till not 0
;
;  initialize seeds for series
;
```

```
        lda     #00             ; initialize to ques 000
        sta     qn              ;
        sta     offset          ;
;
        ldx     #1              ; start with series 100 seed
;
moreseries:
notserstart:
        jsr     phxy            ; save x-reg
        jsr     RAND            ; get a random number
        jsr     plxy            ; restore x-reg
        pha                     ; save answer from RAND
        inc     offset          ; increment answer number
        lda     offset          ; check for wrap to next series
        cmp     #100            ;
        bne     notnewseries    ; not new series
        lda     #00             ; initialize to new series
        sta     offset          ;
        inc     qn              ;
notnewseries:
        pla                     ; restore answer
        cpx     qn              ; check if new series
        bne     notserstart     ; not yet
        sta     SEEDS,x         ; yes - save it
        inx                     ; check if more series to do
        cpx     #10             ;
        bne     moreseries      ; more to do
;
        lda     #01             ;
        sta     qn              ; init series number to 1
        lda     #01             ;
        sta     offset          ; init. offset to 1
        lda     #00             ;
        sta     lq              ; init. last question to 0
        sta     fq              ; init. first question to 0
        sta     rvptr           ; init review pointer to 0
        sta     revfl           ; init review flag to 0
dpsort
inpst
        ldx     #00             ; start from 00
        jsr     disclr          ; clear display
;
        lda     #cs
        sta     disply          ; display "s or t"
```

```
        lda     #co
        sta     disply+2
        lda     #cr
        sta     disply+3
        lda     #ct
        sta     disply+5
        jsr     getkey          ; get a key
        cmp     #score          ; score key?
        bne     ckmode          ; no, check mode
        jsr     dscore          ; yes, display score
        jmp     dpsort          ; back to s or t
ckmode
        cmp     #ts             ; test key?
        bne     ckstdy          ; no, check study
        jsr     tstset          ; yes, set up test key
        jmp     qdisp           ; display question
ckstdy
        cmp     #st             ; study key?
        bne     ckgt            ; no, check goto
        jsr     sdyset          ; yes, set up study mode
ckgt
        cmp     #gotok          ; goto key?
        bne     inpst           ; no, key is invalid, get another
        jmp     notnum          ; handle goto key
qdisp
        ldx     #00
        jsr     disclr          ; clear display
qndisp
        lda     offset
        jsr     htod            ; convert offset to qn
        stx     qn+1            ; store decimal quest. #
        sty     qn+2
        ldx     #03
loop1
        lda     qn-1,x
        clc
        adc     #10             ; set up to output number
        sta     disply-1,x      ; store in display
        dex
        bne     loop1           ; get next number
        lda     #cques          ; display ?
        sta     disply+4
;
```

0085212

```
;    main key input loop
;
keylp
inp2
            jsr         getkey              ; get a key
inp2a
            cmp         #as                 ; key < * key?
            bcs         notnum              ; no, then not a # key
            jsr         callnum             ; yes, call the t/f/# routine
            jmp         (subrtn)            ; jump to return point
notnum
            sbc         #as                 ; adjust to get table offset
            asl                             ; double it
            tax
            lda         calltbl,x           ; get routine address
            sta         subcall             ; store in subcall
            lda         calltbl+1,x         ; get lo byte
            sta         subcall+1
            jsr         call                ; call the routine
            jmp         (subrtn)            ; jump to the addr. in subrtn
callnum
            pha                             ; save key
            lda         #(lo,tfnum)         ; lo byte of tfnum
            sta         subcall
            lda         #(hi,tfnum)         ; hi byte of tfnum
            sta         subcall+1           ; into subcall
            pla                             ; restore key
call
            jmp         (subcall)           ; jump to loc. in subcall
;
;    table of key handler routines
;
calltbl
            dw          review              ; * key
            dw          clear               ; clear key
            dw          test
            dw          answer
            dw          study
            dw          next
            dw          score
            dw          goto
;
```

```
;
;
        list    J
;
        sect    'ROM'.
;
study
;
        lda     modefl          ; check modeflag
        beq     notval          ; if clear, key is invalid
        jsr     sdyset
notval
        lda     #(lo,qdisp)
        sta     subrtn
        lda     #(hi,qdisp)
        sta     subrtn+1        ; return to qdisp
        rts
;
;   set up study mode
;
sdyset
        lda     #00
        sta     modefl          ; clear modefl
        ldx     #00
        jsr     disclr          ;clear display
        lda     #cs
        sta     disply+1        ; display "study"
        lda     #ct
        sta     disply+2
        lda     #cu
        sta     disply+3
        lda     #cd
        sta     disply+4
        lda     #cy
        sta     disply+5
        jsr     delay
        rts
;
;
;
        list    J
;
        sect    'ROM'
```

0085212

```
;
test
        lda     modefl          ; check mode flag
        bne     ignore          ; if set, ignore key
        jsr     tstset          ; else, set up test mode

ignore
        lda     #(lo,qdisp)
        sta     subrtn
        lda     #(hi,qdisp)
        sta     subrtn+1        ; set return to qdisp
        rts
tstset
        lda     #01
        sta     modefl          ; set mode flag
        lda     #00
        sta     lq              ; set last question to 0
        sta     revfl           ;
        sta     rvptr           ;
        lda     offset          ;
        sta     fq              ; set first question to current
        lda     #00
        ldx     #100
clrrw
        sta     rwres-1,x
        dex                     ; clear right/wrong array
        bne     clrrw
        ldx     #00
        jsr     disclr          ; clear display
        lda     #ct             ; display "test"
        sta     disply+2
        lda     #ce
        sta     disply+3
        lda     #cs
        sta     disply+4
        lda     #ct
        sta     disply+5
        jsr     delay
        rts
;
```

0085212

```
;
;
;      tfnum   handles the true, false, and number keys
;
        list    1,
;
        sect    'ROM'
;
tfnum
        pha                          ;
        jsr     restdisp             ;
        pla                          ;
;
        cmp     #11
        bcs     valid                ; if key < 11, its invalid
        jmp     rto440               ; return
valid
        cmp     #16                  ;
        bcc     keyok                ; if key <16, its ok
        cmp     #kt
        bcs     keyok                ; if key > true key, its valid
        jmp     rto440               ; else, return
keyok
        sta     resp                 ; store response
        lda     modefl
        bne     intest               ; branch to intest
        lda     resp                 ; for study : load response
        sta     disply+4
        lda     #cblank
        sta     disply+5             ; display "<resp> "
        bne     both                 ; branch around display for test
intest
        lda     resp
        sta     disply+5             ; display response
both
        ldx     #06
        jsr     disclr               ; clear remaining display pos.
inp4
        jsr     getkey               ; get a key
        cmp     #as
        bcc     tfnum                ; if another #/t/f key, start over
        cmp     #c1
        bne     norto400
        jmp     rto400               ;
norto400:
```

0085212

```
            pha
            jsr     restdisp        ;
            pla                     ;
            cmp     #an             ; answer key?
            bne     imp4            ; no, start over
            lda     modefl          ;
            beq     stmode          ; dont blank response
            lda     #cblank         ; confirm answer key pushed
            sta     disply+4        ;
stmode
;
;   find correct answer from random number generator
;       leave it in accumulator
;
            jsr     RAND            ; get the random number answer for this ques
;
            pha
            lda     resp
            cmp     #kt             ; true key?
            bcc     number          ; less, so its a number
            bne     false           ; greater, so its a false key
true
            pla                     ; restore answer
            cmp     #4              ; answer = 4?
            bcc     right           ; less, so response is right
            jmp     wrong           ; else, its wrong
false
            pla                     ; restore answer
            cmp     #04             ; answer = 4?
            bcs     right           ; >= 4 is right
            jmp     wrong           ; else, wrong
number
            sec
            sbc     #10             ; decode key
            sta     resp            ; store it
            pla                     ; restore answer
            cmp     resp            ; answer = response?
            bne     wrong           ; no, resp is wrong
right
            lda     modefl          ; what mode?
            bne     testmd          ; test-jump
            lda     #cy             ; display "yes"
            sta     disply+5
```

```
             lda      #co
             sta      disply+6
             lda      #co
             sta      disply+7
             jmp      rto440              ; return
testmd
             lda      offset
             tax
             cmp      lq                  ; current question:lq
             bcc      noact               ; current < lq, then no action
             sta      lq                  ; else, set current to lq
noact
             lda      #01
             sta      rwres,x             ; mark correct in rwres
             jmp      rto440              ; return .
wrong
             lda      modefl              ; check mode
             beq      stdymd              ; jump if in study
             lda      offset.             ; offset:lq
             cmp      lq                  ; offset<lq, return
             bcc      rto440              ; else set lq to offset
             sta      lq
             jmp      rto440
stdymd
             lda      #cn                 ; display "no"
             sta      disply+5
             lda      #co
             sta      disply+6
rto400
             lda      #(lo,qndisp)        ; set return to qdisp
             sta      subrtn
             lda      #(hi,qndisp)
             sta      subrtn+1
             rts
rto440
             lda      #(lo,keylp)         ; set return to keylp
             sta      subrtn
             lda      #(hi,keylp)
             sta      subrtn+1
             rts
;
RAND:
             lda      qn                  ; need series number
             asl                          ; double it ...
```

```
        tax                     ; and use as offset
        lda     ansptrs,x       ; to a pointer
        sta     ansptr          ; page 0 pointer for
        lda     ansptrs+1,x     ; indirect addressing
        sta     ansptr+1        ; of a correct answer
        ldy     offset          ; now get number in series
        lda     (ansptr),y      ; and get the right answer
        and     #0fh            ; answers stored in ascii
        rts                     ; return answer in a-reg
;
; pointers to answers
;
ansptrs:
        dw      answers+900-100
        dw      answers+100-100
        dw      answers+200-100
        dw      answers+300-100
        dw      answers+400-100
        dw      answers+500-100
        dw      answers+600-100
        dw      answers+700-100
        dw      answers+800-100
        dw      answers+900-100
;
        end
```

CLAIMS:                                                0085212

1.    A teaching device comprising:

means for automatically sensing an encoded text key and generating in response thereto a text signal;

means, responsive to the text signal, for automatically generating an answer key, said answer key indicative of a sequence of correct answers, at least some of said correct answers corresponding to respective questions associated with said text key;

means for registering a manually generated answer signal indicative of a proposed answer to a selected one of said questions; and

means for automatically comparing the manually generated answer signal with the answer key to determine whether the proposed answer corresponds to the respective correct answer.

2.    The invention of Claim 1 wherein the sensing means includes a plurality of digital switches positioned to read a digital text key encoded on a surface of a text book.

3.    The invention of claim 2 wherein the plurality of digital switches are mechanical switches activated by a text key which includes a physical digital pattern encoded on the surface of the text book.

4.    The invention of claim 2 or 3 wherein the plurality of digital switches are positioned to read a text key encoded as a strip on a marginal edge of the surface of the text book.

5.    The invention of claim 2 or 3 wherein the plurality of switches are adapted to sense the presence or absence of a punched hole formed in the surface of the text book.

-51-

**0085212**

6. The invention of claim 1 wherein the means for generating an answer key includes means for performing a calculation based on said text signal to generate said answer key.

7. The invention of claim 1 wherein the means for generating an answer key includes a pseudo-random number generator and means for supplying said text signal to the pseudo-random number generator as a seed to generate the answer key.

8. A teaching device comprising in combination:
   a text book;
   a text key encoded on a surface of the text book;
   means for automatically sensing an encoded text key and generating in response thereto a text signal;
   means, responsive to the text signal, for automatically generating an answer key, said answer key indicative of a sequence of correct answers, at least some of said correct answers corresponding to respective questions associated with said text key;
   means for registering a manually generated answer signal indicative of a proposed answer to a selected one of said questions; and
   means for automatically comparing the manually generated answer signal with the answer key to determine whether the proposed answer corresponds to the respective correct answer.

9. The invention of claim 8 wherein the text key is digitally encoded and the sensing means includes a plurality of digital switches positioned to read the text key.

10. The invention of claim 9 wherein the text key includes a physical digital pattern encoded on the surface of the text book and the plurality of digital switches are mechanical switches.

11. The invention of claim 9 or 10 wherein the text key is encoded as a strip on a marginal edge of the surface of the text book.

12. The invention of claim 9 or 10 wherein each of the plurality of switches is adapted to sense the presence or absence of a punched hole formed in the surface of the text book.

13. The invention of claim 8 wherein the means for generating an answer key includes means for performing a calculation based on said text signal to generate said answer key.

14. The invention of claim 8 wherein the means for generating an answer key includes a pseudo-random number generator and means for supplying said text signal to the pseudo-random number generator as a seed to generate the answer key.

15. A teaching device comprising:
   a housing;
   a plurality of digital switches mounted on the housing and arranged to sense a text key on a text book positoned adjacent the switches and to generate in response thereto a digital text signal;
   means, responsive to the text signal, for automatically generating an answer key, said answer key indicative of a sequence of correct answers, at least some of said correct answers corresponding to respective questions associated with said text key;

means for registering a manually generated answer signal indicative of a proposed answer to a selected one of said questions; and

means for automatically comparing the manually generated answer signal with the answer key to determine whether the proposed answer corresponds to the respective correct answer.

16. A teaching device comprising:

a housing;

a text book positioned adjacent the housing;

a text key digitally encoded on a surface of the text book;

a plurality of digital switches mounted on the housing and arranged to sense the text key and to generate in response thereto a digital text signal;

means, responsive to the text signal, for automatically generating an answer key, said answer key indicative of a sequence of correct answers, at least some of said correct answers corresponding to respective questions associated with said text key;

means for registering a manually generated answer signal indicative of a proposed answer to a selected one of said questions; and

means for automatically comparing the manually generated answer signal with the answer key to determine whether the proposed answer corresponds to the respective correct answer.

17. The invention of claim 15 or 16 wherein the plurality of digital switches are mechanical switches activated by the text key, and the text key includes a physical digital pattern encoded on the surface of the text book.

18. The invention of claim 15 or 16 wherein the plurality of digital switches are positioned to read

-54-

0085212

the text key, and the text key is encoded as a strip on a marginal edge of the surface of the text book.

19. The invention of claim 15 or 16 wherein each of the plurality of switches is adapted to sense the presence or absence of a punched hole formed in the surface of the text book.

20. The invention of claim 15 or 16 wherein the means for generating an answer key includes means for performing a calculation based on said text signal to generate said answer key.

21. The invention of claim 15 or 16 wherein the means for generating an answer key includes a pseudo-random number generator and means for supplying said text signal to the pseudo-random number generator as a seed to generate the answer key.

22. A text book for a teaching device, said text book comprising:

a set of pages bearing a plurality of questions and a plurality of sets of possible multiple choice answers, each set of answers corresponding to a respective one of said plurality of questions; and

a text key encoded on a surface of one of the set of pages, said text key including a plurality of digital indicia, the total number of said digital indicia being less than the total number of said questions, said text key indicative of a pre-selected answer key which specifies a correct answer for each set of possible multiple choice answers.

23. The invention of claim 22 wherein the digital indicia include a digital physical pattern formed on the surface of the text book.

24. The invention of claim 22 wherein the digital indicia are positioned along a strip of a marginal edge of the surface of the text book.

25. The invention of claim 22 wherein the set of pages includes a plurality of pages and one of the plurality of pages includes a marginal flap foldable between a retracted positioned, in which the flap does not extend substantially beyond the remaining pages, and an extracted position, in which the flap extends beyond the remaining pages, and the text key is encoded on the flap.

26. The invention of claim 25 wherein the digital indicia include a digital physical pattern formed on the flap.

27. The invention of claim 23 or 26 wherein the digital indicia include a pattern of apertures.

28. A text book for a teaching device, said text book comprising:
a plurality of pages, said pages bearing a plurality of questions and a plurality of sets of possible multiple choice answers, each set of answers corresponding to a respective one of said plurality of questions; and
a digital text key encoded as a pattern of digital indicia on a marginal section of one of the plurality of pages, said digital indicia including a pattern of perforated and unperforated surfaces on said marginal section, the total number of said digital indicia being less than the total number of said questions, said text key indicative of a pre-selected answer key which specifies a correct answer for each set of possible multiple choice answers.

-56-

29.    The invention of claim 28 wherein one of said plurality of pages includes a marginal flap foldable between a retracted position, in which the flap does not extend substantially beyond the remaining pages, and an extracted position, in which the flap extends beyond the remaining pages, and the pattern of perforated and unperforated surfaces is formed on the flap.

30.    A teaching device comprising:

means for registering a text key and generating in response thereto a text signal;

means for automatically performing a calculation based on said text signal to generate an answer key, said answer key indicative of a sequence of correct answers, at least some of said correct answers corresponding to respective multiple choice questions associated with said text key;

means for registering a manually generated answer signal indicative of a proposed answer to a selected one of said questions; and

means for automatically comparing the manually generated answer signal with the answer key to determine whether the proposed answer corresponds to the respective correct answer.

31.    The invention of claim 30 wherein the means for performing a calculation includes a pseudo-random number generator and means for supplying said text signal to the pseudo-random number generator as a seed to generate the answer key.

32.    A teaching device comprising:

means for registering a text key and generating in response thereto a text signal;

a pseudo-random number generator;

means for supplying the text signal to the pseudo-random number generator as a seed to generate an answer key, said answer key indicative of a sequence of correct answers, at least some of said correct answers corresponding to respective multiple choice question associated with the text key;

means for registering a manually generated answer signal indicative of a proposed answer to a selected one of said questions; and

means for automatically comparing the manually generated answer signal with the answer key to determine whether the proposed answer corresponds to the respective correct answer.

33. A teaching device comprising in combination:

a text book, said text book including a plurality of pages, said pages bearing a plurality of questions and a plurality of sets of possible multiple choice answers, each set of answers corresponding to a respective one of said plurality of questions;

a text key encoded as a pattern of perforated and unperforated regions positioned along a marginal portion of one of the pages;

a housing;

means for releasably holding the marginal portion in registration with the housing such that the text key is maintained in position adjacent the housing;

a plurality of mechanical switches mounted in the housing and positioned such that each of the switches is adjacent one of the perforated and unperforated regions and the switches sense the pattern of perforated and unperforated regions and generate in response thereto a binary text signal;

a computer, responsive to the text signal;

means, included in the computer, for generating a pseudo-random number as a function of a seed input signal;

means, included in the computer, for supplying the text signal to the generating means as a seed input signal to obtain an answer key, said answer key indicative of a sequence of correct answers, at least some of said correct answers corresponding to respective ones of said plurality of questions;

means, included in the computer, for registering a manually generated answer signal indicative of a proposed answer to a selected one of said plurality of questions; and

means, included in the computer, for automatically comparing the manually generated answer signal with the answer key to determine whether the proposed answer corresponds to the respective correct answer.

FIG.1

FIG.2

FIG. 3

0085212

# FIG. 4

# FIG. 5

# FIG.6

**0085212**

Application number

EP 82 30 0520.2

European Patent Office

**EUROPEAN SEARCH REPORT**

| Category | Citation of document with indication, where appropriate, of relevant passages | Relevant to claim |
|---|---|---|
| | **DOCUMENTS CONSIDERED TO BE RELEVANT** | |
| A | GB - A - 2 024 480 (COLECO INDUSTRIES INC.)<br>* page 1, lines 55 to 100 * | 1,8,<br>13,22 |
| A | GB - A - 1 451 177 (J.R. HARTE)<br>* page 1, lines 10 to 20 * | 3,5,<br>12,19 |
| A | GB - A - 2 012 598 (INVICTA PLASTICS LTD.)<br>* page 1, lines 27 to 39 * | 7,14,<br>15,21,<br>31,32 |
| A | US - A - 4 164 078 (A.E. GOLDFARB)<br>* column 2, lines 54 to 68 * | |

**CLASSIFICATION OF THE APPLICATION (Int. Cl. 3)**

G 09 B 7/06
A 63 F 9/18

**TECHNICAL FIELDS SEARCHED (Int.Cl. 3)**

A 63 F 9/00
G 06 F 15/20
G 09 B 3/00
G 09 B 7/00

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

The present search report has been drawn up for all claims

| Place of search | Date of completion of the search | Examiner |
|---|---|---|
| Berlin | 23-08-1982 | BOTTERILL |

EPO Form 1503.1 06.78